# EUROPÄISCHE PATENTANMELDUNG

(11) **EP 2 436 754 A1**
(43) Veröffentlichungstag der Anmeldung: **04.04.2012**
(21) Anmeldenummer: 11183580.7
(22) Anmeldetag: 30.09.2011
(51) Int. Cl.: C11D 1/66, C11D 3/20, C11D 3/24, C11D 3/48

(54) **Antimikrobielle Reinigungszusammensetzung**

(71) Anmelder: BASF SE, 67056 Ludwigshafen (DE)
(72) Erfinder: Both, Sabine, 41470 Neuss (DE); Muckenschnabel, Christian, 41524 Dormagen (DE); Hazenkamp, Menno, 4125 Riehen (CH)
(74) Vertreter: Fitzner, Uwe

(57) **Zusammenfassung**

Die vorliegende Erfindung betrifft eine antimikrobielle Reinigungszusammensetzung enthaltend mindestens ein Zuckertensid und eine Verbindung der Formel (I) als Biozid, sowie die Verwendung der Zuckertenside zur Verbesserung der Aktivität des Biozid.

## Beschreibung

Die vorliegende Erfindung betrifft eine antimikrobielle Reinigungszusammensetzung enthaltend mindestens ein Zuckertensid und eine Verbindung der Formel (I) als Biozid, sowie die Verwendung der Zuckertenside zur Verbesserung der Aktivität des Biozid.

Harte Oberflächen reinigende und desinfizierende Zusammensetzungen umfassen im Allgemeinen ein oder mehrere Tenside und gegebenenfalls ein oder mehrere Biozid(e). In solchen Reinigungszusammensetzungen werden meistens anionische, nichtionische, amphotere und/oder kationische Tenside verwendet. Nichtionische Tenside werden üblicherweise aufgrund ihrer Wirksamkeit gegen Fettverschmutzungen verwendet. Nichtionische Tenside zeigen niedrige oder keine biozide Wirkung, wobei zu bemerken ist, dass im Allgemeinen die biozide Wirkung von Tensiden niedrig ist.

Deshalb ist es üblich ein gesondertes Biozid zu den Zusammensetzungen zu gegeben. Typische Biozid sind starke Säuren, Alkali, phenolische Stoffe und Oxidanzien, wie Persäuren und Hypohalogenite. Diese Biozid sind im Allgemeinen stark reaktive Spezies. Dadurch zeigen sie toxische, korrosive und reizende Eigenschaften. Ferner ist ihre Aktivität als Biozid aufgrund ihrer starken Reaktivität von kurzer Lebensdauer. Somit sind diese reaktiven Komponenten in relativ hohen Anteilen in den Reinigungsmitteln erforderlich.

In der DE69722408T2 wird von einer Synergie bezüglich antimikrobieller Wirksamkeit zwischen aromatischen Alkoholen oder Phenolen, die von Phenol an sich verschieden sind und nichtionischen ethoxylierten Alkanol-Tensiden, außerhalb des physiologischen pH-Bereichs berichtet. Eine Erhöhung der Reinigungsleistung wird jedoch nicht offenbart.

Aus dem Stand der Technik sind weitere Tenside bekannt, die die Wirkungen bestimmter Biozidn erhöhen. In der DE 3619375 wurde gefunden, dass die Verwendung von Alkylglycosiden als in alkohol- oder carbonsäurehaltigen antiseptischen Mitteln zu einer deutlichen Verstärkung der bakteriziden Wirkung der Alkohole bzw. Carbonsäuren führt. Dies zeigt sich in einer Verbesserung der mikrobiziden Wirkung gegenüber grampositiven Bakterien. Diese Zusammensetzungen werden bei einem stark sauren pH-Wert, im Allgemeinen unter pH 3, angewendet. Allerdings wird hier nicht auf eine verbesserte Reinigung, sondern verbesserte Wirkung des Biozid eingegangen.

In der DE60210317T2 wird eine antimikrobielle Zusammensetzung zur Behandlung einer Oberfläche beschrieben, die als Biozid ein polymeres Biguanid enthält. Diese wässrige Zusammensetzungen ein gutes Film-/Streifenbildungs- und Glanzretentions-/- verstärkungsprofil bei gleichzeitiger biozider Wirkung. Eine verbesserte Reinigung wird nicht offenbart.

Der Fachmann weiss, dass die unpolaren Biozide die Reinigungsleistung verringern.

Es sind auch weitere Tensid/Biozid-Kombinationen bekannt, die eine verminderte Wirkung, verglichen mit dem Biozid an sich, zeigen. In der Theorie wird das mit Mizellen des Tensids erklärt, in die das Biozid adsorbiert wird und deshalb weniger zur Wirkung zeigt ("Surface Active Agents",Porter 1990, Elsevier).

Die Verwendung von Hydroxydiphenylether als mikrobizide Wirkstoffbestandteile in Haushaltsreinigungsmitteln ist z.B. aus der EP 1 167 503 A1 bekannt. Hier wird jedoch darauf hingewiesen, dass diese Reinigungsmittel einen hohen Gehalt an synthetischen Detergenzien oder Seifen aufweisen, welche die bakterizide Wirkung des Hydroxydiphenylethers in der Formulierung stark vermindern. Dadurch wird die bakterizide Aktivität solcher Haushaltsreinigungsmittel unbefriedigend.

Aufgabe der vorliegenden Erfindung war es, neue, verbesserte antimikrobielle Reinigungszusammensetzungen zur Verfügung zu stellen, die insbesondere eine verbesserte, primäre und/oder sekundäre Reinigungsleistung zeigen. Außerdem sollte dabei die antimikrobielle Wirkung konstant bleiben bzw. verbessert werden.

Dies Aufgabe wird durch die erfindungsgemäße antimikrobielle Reinigungszusammensetzung gelöst.

Gegenstand der vorliegenden Erfindung ist somit eine antimikrobielle Reinigungszusammensetzung enthaltend mindestens ein Zuckertensid und eine Verbindung der Formel (I) als Biozid

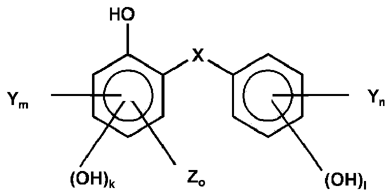

Wobei die Indizes folgende Bedeutung haben
X = O, S oder - CH2-,
Y = Cl oder Br,
Z = SO2H, NO2 oder C1 - C4-Alkyl,
k, l = 0 oder 1,
m = 0, 1, 2 oder 3,
n = 0, 1, 2 oder 3,
o=0 oder 1.

Zuckertenside im Sinne der vorliegenden Erfindung sind nichtionische Tenside mit einem Kohlenhydrat als hydrophilem Anteil und Fettalkoholen oder Fettsäuren als hydrophobe Komponente. In einer Ausführung der vorliegenden Erfindung wird ein Zuckertensid der allgemeinen Formel (II)

**R-O-Gₚ**

mit R = Alkyl oder Alkenyl,
G = Aldose oder Ketose und
P = 1, 2, 3, 4, 5, 6, 7, 8, 9 oder 10 eingesetzt.

In einer weiteren Variante handelt es sich bei den erfindungsgemäß zu verwendenden Zuckertensiden um Alkyl- und/oder Alkenylpolyglycoside der Formel II in der R für ein Alkyl- und/oder Alkenylrest mit 4 bis 22 Kohlenstoffatomen, G für einen Zuckerrest mit 5 oder 6 Kohlenstoffatomen und P für die Zahlen von 1 bis 10 steht. In einer weiteren Ausführung leiten sich die Alkyl- und/oder Alkenylpolyglycoside von Aldosen oder Ketosen mit 5 oder 6 Kohlenstoffatomen ab.

Die Komponente G in Formel (II) wird in einer Ausführung ausgewählt aus der Gruppe Hexosen, bevorzugt der Gruppe enthaltend Allose, Altrose, Glucose, Mannose, Gulose, Idose, Galactose, Talose, Psicose, Fructose, Sorbose, Tagatose, besonders bevorzugt Glucose.

Die Komponente G in Formel (II) wird in einer weitern Ausführung ausgewählt aus der Gruppe Pentosen, bevorzugt der Gruppe enthaltend Ribulose, Xylulose, Ribose, Arabinose, Xylose, Lyxose, besonders bevorzugt Xylose und/oder Arabinose.

Die bevorzugten Alkyl-und/oder Alkenyloligoglykoside sind in einer Variante der Erfindung Alkyl- und/oder Alkenyloligoglucoside.

Die Indexzahl p in der allgemeinen Formel (I) gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muss und hier vor allem die Werte p = 1 bis 6 annehmen kann, ist der Wert p für ein bestimmtes Alkyl(oligo)glykosid eine analytisch ermittelte rechnerische Größe, die meistens eine gebrochene Zahl darstellt. In einer Ausführung der Erfindung werden Alkyl- und/oder Alkenyloligoglykoside mit einem mittleren Oligomerisierungsgrad p von 1,1 bis 3,0 eingesetzt.

Die erfindungsgemäßen Alkyl- und/oder Alkenylpolyglycoside können nach den einschlägigen Verfahren der präparativen organischen Chemie erhalten werden. Stellvertretend für das umfangreiche Schrifttum sei hier auf die Übersichtsarbeit von Biermann et al. in Starch/Stärke 45, 281 (1993), sowie J.Kahre et al. in SÖFW-Journal Heft 8, 598 (1995) verwiesen.

Neben Alkyl- und/oder Alkenylpolyglycoside auf Basis von unverzweigten Fettalkoholen werden in einer Variante Alkyl- und/oder Alkenylpolyglycoside mit verzeigte Reste R eingesetzt.

Der Rest R in Formel (II) wird in einer Ausführung ausgewählt aus der Gruppe der Alkoholen enthaltend Fettalkohole, primäre Alkohole, insbesondere sogenannte Oxoalkohole, zum Beispiel Nonyl-, Undecyl- oder Tridecylalkohole, und primäre Alkohole, die lineare Octyl-, Decyl-, Dodecyl-, Tetradecyl-, Hexadecyl- oder Octadecylgruppen enthalten sowie Gemische davon.

In einer Variante werden Alkohole mit einer Kohlenstoffkette, die auch verzweigt sein kann, mit C4-C18, bevorzugt C12-C16, insbesondere C12-C14 ausgewählt.

In einer Ausführung der Erfindung handelt es sich bei den verzweigten Resten um isoAmyl, iso-Hexyl und/oder iso-heptyl, bevorzugt 2-Ethyl-Hexyl und/oder 2-Propyl-Heptyl. Erfindungsgemäß können auch Gemische unterschiedlicher Verbindungen der allgemeinen Formel (II) eingesetzt werden. So können alle Kombinationen der unterschiedlichen Aldosen oder Ketosen mit allen möglichen Alkyl- und/oder Alkenylresten eingesetzt werden.

In einer weiteren Ausführung enthält die erfindungsgemäße Reinigungszusammensetzung als Biozid eine Verbindung der Formel (la) 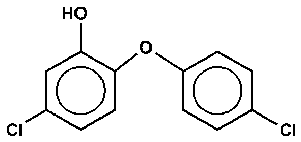 oder der Formel (Ib) 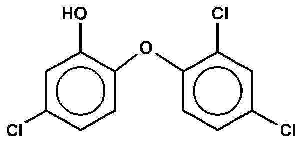 , bevorzugt (la).

Erfindungsgemäß können auch Gemische unterschiedlicher Verbindungen der allgemeinen Formel (I) eingesetzt werden. So können alle Kombinationen der unterschiedlichen Verbindungen der allgemeinen Formel (II) mit den unterschiedlicher Verbindungen der allgemeinen Formel (I) in den erfindungsgemäßen Zusammensetzungen eingesetzt werden, aber auch Kombinationen von Gemischen der unterschiedlichen Verbindungen der allgemeinen Formel (II) mit den Gemischen der unterschiedlicher Verbindungen der allgemeinen Formel (I).

Im Sinne der Erfindung sind Reinigungszusammensetzungen beziehungsweise Reinigungsmittel:
- Mittel zur Reinigung und/oder Desinfektion von harten Oberflächen, wie Allzweckreiniger, Bodenreiniger, Geschirrpülmittel für manuelle oder automatische Geschirreinigung, Handspülmittel, Glasreiniger, Küchenreiniger, Bad- und Sanitärreiniger, WC-Reiniger, Desinfektionsreiniger.
- Reinigungs- und Pflegemittel für Textilien und Wäsche, wie Waschmittel, Weichspüler, Fleckenentfernungsmittel.

Formulierungstypen der Reinigungsmittel werden ausgewählt aus der Gruppe enthaltend: Reinigungs- und Desinfektionsmittelkonzentrat, Flüssige Reiniger oder Desinfektionsmittel, Pulverförmige Reiniger oder Desinfektionsmittel, Flüssige Reiniger oder Desinfektionsmittel, Sprays zur Reinigung oder Desinfektion, Emulsionen und Gele.

Die zu behandelnden Oberflächen werden ausgewählt aus der Gruppe enthaltend: Glas, Kunststoffe, Metalle, Stahl, Holz, Steinmaterialien, Keramik, Zement, Beschichtungen, Verbundmaterialien, Textilien (Naturfasern wie z.B. Baumwolle, Wolle, Seide und synthetische Fasern wie Polyester, Polyolefine (PE, PP etc.), Polyamide, Polyurethane, PVC etc.), Schaumstoffe und Polstermaterialien und Teppiche.

In einer Variante der vorliegenden Erfindung handelt es sich um eine Reinigungszusammensetzung für harte Oberflächen. Harte Oberflächen im Sinne der Erfindung sind z.B. Kacheln, Fliesen, Keramik, Glas, Glasfasern, Metalle, Stahl, Aluminium, Kunststoff, Holz, Steinmaterialien, Beschichtungen, Verbundmaterialien, Zement und dergleichen, aber keine Textilien.

Beim Reinigen von harten Oberflächen ist es häufig notwendig, eine Oberfläche zu desinfizieren. Unter desinfizieren wird in dieser Anmeldung die Abtötung oder die Wachstumsreduktion von Mikroorganismen verstanden.

In einer weiteren Ausführung der Erfindung besitzt die Zusammensetzung pH-Wert zwischen 5 und 12, bevorzugt 7 bis 10, insbesondere 7 bis 9.

Die erfindungsgemäße Zusammensetzung liegt in einer Variante als Konzentrat vor. Bei den Konzentraten handelt es sich in der Regel um wäßrige Zubereitungen mit einem erhöhten Aktivsubstanzgehalt, der durch Verdünnen (meistens mit Wasser) auf die jeweilige, der Anwendung entsprechende Konzentration eingestellt wird. Die Konzentrate enthalten bevorzugt zusätzlich Antioxidationsmittel wie z.B. BHT, Ascorbinsäure etc. als Stabilisatoren.

In einer weiteren Ausführung enthält die erfindungsgemäße Reinigungszusammensetzung die Verbindung der Formel (I) in einer Endkonzentration von 0,0001 bis 10% eingesetzt, bevorzugt 0,0001 bis 1 %, insbesondere 0,003 bis 0,5% Gewichtsprozent und die Verbindung der Formel (II) in einer Endkonzentration von 0,1 bis 20% eingesetzt, bevorzugt 1 bis 10%, besonders bevorzugt 2 bis 5% insbesondere 2,5 Gewichtsprozent.

In einer Ausführung der Erfindung wird für die Reinigung und Desinfektion die Verbindung der Formel (I) in einer Endkonzentration von 0,0001 bis 10% eingesetzt, bevorzugt 0,0001 bis 1 %, insbesondere 0,003 bis 0,5% Gewichtsprozent.

In einer Ausführung der Erfindung wird für die Reinigung die Verbindung der Formel (II) in einer Endkonzentration von 0,1 bis 20% eingesetzt, bevorzugt 1 bis 10%, besonders bevorzugt 2 bis 5% insbesondere 2,5 Gewichtsprozent.

Falls Konzentrate vorlegen werden diese verdünnt, so dass beim Auftrag auf die zu reinigende Oberfläche die Verbindungen der Formel (I) und (II) in den oben genannten Konzentrationen vorliegen.

Die erfindungsgemäße Reinigungszusammensetzung enthält in einer Variante mindestens einem weiteren Zusatzstoff ausgewählt aus der Gruppe enthaltend: Stabilisatoren, Antioxidantien, weitere Tenside, Säuren, Basen, Hydrotrope, Bleichsysteme, Konsistenzgeber, Konservierungsmittel, Dispergiermittel, Duftstoffe, Farbstoffe, Komplexbildner, Lösungsmittel und Wasser.

Weiterer Gegenstand der vorliegenden Erfindung ist ein Verfahren zur Herstellung der erfindungsgemäßen antimikrobiellen Reinigungszusammensetzung. Die Herstellung erfolgt in dem Fachmann bekannten Arbeitsschritten durch Mischen der Zutaten, wobei das Biozid der Formel (I) zunächst in dem Zuckertensid vorgelöst wird und anschließend in eine wässrige Phase gebracht wird.

Ferner ist Gegenstand der Erfindung auch die Verwendung eines Biozid der Formel (I) zur Steigerung der Reinigungsleistung von nichtionischen Zuckertensiden. Dabei wird insbesondere die primäre Reinigungsleistung verbessert im Vergleich zu einer Kontrolle ohne das erfindungsgemäße Biozid.

Im Sinne der vorliegenden Erfindung ist unter primärer Reinigungsleistung die Entfernung von Schmutz von einer Oberfläche, bevorzugt von einer harten Oberfläche zu verstehen. Um die primäre Reinigungsleistung zu messen wird in einer Variante der Erfindung der IPP-Gardner-Test für Allzweckreiniger gemäß "IPP-Norm"(SÖFW, No. 10/1986, Seite 371) eingesetzt.

Die vorliegende Erfindung betrifft somit ein Verfahren zur Verbesserung der primären Reinigungsleistung eines Reinigungsmittels enthaltend nichtionische Zuckertenside durch Einsatz eines Biozid der Formel (I) im Vergleich zu einer Kontrolle ohne dieses Biozid gemessen mit dem IPP-Gardner-Test für Allzweckreiniger gemäß "IPP-Norm"(SÖFW, No. 10/1986, Seite 371) oder einer Variante davon.

Die primäre Reinigungsleistung wird erfindungsgemäß um 2%, 3%, bevorzugt 4%, 5%, 6%, besonders bevorzugt 7%, 8%, 9%, insbesondere 10% oder mehr erhöht.

Gegenstand der vorliegenden Erfindung ist in einer Ausführung ein Verfahren zur Erhöhung der antimikrobiellen Wirkung einer Reinigungszusammensetzung enthaltend nichtionische Zuckertenside durch Zugabe eines Biozid der Formel (I).

Der Einsatz des Biozid der Formel (I) in einer Reinigungszusammensetzung enthaltend nichtionische Zuckertenside führt neben der Verbesserung der primären Reinigungsleistung zu dem Erhalt oder Verbesserung der sekundären Reinigungsleistung.

Die sekundäre Reinigungsleistung ist in einer Ausführung der Erfindung der Glanzerhalt der gereinigten Oberfläche.

In einer Variante der Erfindung wird das Glanzverhalten mit folgendem Test bestimmt: Vor dem Auftrag der Testsubstanz wird eine schwarze Keramikfliese in einer Geschirrspülmaschine mit dem 55°C-Program "Universal Plus" und standard Spülmaschinenpulver gespült und nach dem Trocknen mit Isopropanol und anschließend mit Ethylacetat gereinigt. Die Oberfläche wird unter warmem Wasser mit einem Schwamm gesäubert und anschließend mit destilliertem Wasser und Schwamm nochmals gesäubert. Das Abfließen des destillierten Wassers wird visuell überprüft.

Die Lichtreflektion wird in einem 20° Winkel an 5 Punkten der so präparierten Fliese mittels eines BYK-Gardner-Glanzmessers bestimmt. Es werden 25 Tropfen Testsubstanz mit einer Pipette in 5 Reihen mit je 5 Tropfen aufgetragen und mit einem Papierhandtuch verteilt. Die Verteilung erfolgt durch Wischen ohne Druck in 10 Reihen von oben nach unten und 10 von unten nach oben.

Die Testsubstanz z. B. wird in folgender Lösung aufgetragen:
0,1% AS (active Substanz) Testmaterial, 1,0% AS Lutensol ON 80 (BASF), add 100% VE-Wasser
Nach dem Trocknen wird die Lichtreflektion erneut, falls möglich, an denselben Punkten der Fliese bestimmt.

Die Glanz-Retention ergibt sich aus dem Verhältnis des Messwerts der behandelten Oberfläche zu dem Wert der gereinigten Fliese vor Auftrag der Testsubstanz.

In einer Variante der Erfindung ist die Glanz-Retention der erfindungsgemäßen Reinigungszusammensetzung konstant im Vergleich zu dem Wert einer Reinigungszusammensetzung ohne das erfindungsgemäße Biozid, bevorzugt um 2%, 3%, 4%, 5%, 6%, besonders bevorzugt 7%, 8%, 9%, insbesondere 10% oder mehr erhöht.

Die sekundäre Reinigungsleistung ist in einer Ausführung der Erfindung die Materialverträglichkeit.

In einer Variante der Erfindung wird die Materialverträglichkeit mit folgendem Test bestimmt:
Die Bestimmung dient anhand der Rißbildung an Kunststoffstäbchen nach Eintauchen in Reinigerlösungen zur Beurteilung der Verträglichkeit von Reinigern auf Kunststoffen.
Der zu prüfende Kunststoff wird mit einem Metallstift versehen, dadurch unter Spannung gesetzt und in die Testlösung getaucht.

Nach bestimmten Zeitabständen wird die Veränderung des Kunststoffstäbchens beurteilt.

Je nach Aufgabenstellung wird bevorzugt 5% AS (Aktivsubstanz) der zu prüfenden Substanzen eingesetzt.

Die Auswertung erfolgt visuell anhand folgender Wertungkriterien: 1= unverändert, 2= Risse, 3= durchgehender Riss und 4= Bruch.

In einer Variante der Erfindung ist die Materialverträglichkeit der erfindungsgemäßen Reinigungszusammensetzung konstant im Vergleich zu dem Wert einer Reinigungszusammensetzung ohne das erfindungsgemäße Biozid.

In herkömmlichen Reinigungsmitteln ist die Reinigungsleistung proportional zum Emulgiervermögen der Formulierung. Die erfindungsgemäße Reinigungszusammensetzung zeigt jedoch bei gleichem Emulgiervermögen eine verbesserte primäre Reinigungsleistung durch die Zugabe des Biozid.

Die sekundäre Reinigungsleistung ist in einer Ausführung der Erfindung das Emulgiervermögen.

In einer Variante der Erfindung wird das Emulgiervermögen mit folgendem Test bestimmt:
Tensidlösungen einer definierten Konzentration werden im Becherglas mit Olivenöl überschichtet und unter definierten Bedingungen gerührt. Die so erzeugten Emulsionen werden anschließend in Messzylinder überführt. Als Maß für die Emulsionsstabilität wird das Volumen an sich abscheidender wässriger Phase nach einer Stunde und nach vier Stunden bestimmt.

Die Messreihe wird Wahlweise bei einer Wasserhärte von 0°dh oder 16°dh aufgenommen. Zunächst werden 50g wässrige homogene Tensidlösung mit einem Massenanteil von w=2% Aktivsubstanz in einem 400mL Becherglas angesetzt bzw. bei Formulierungen nach der jeweiligen Anforderung. Die frisch angesetzte Lösung wird dann mit 50g Öl überschichtet. Anschließend werden die Lösungen bei einer Temperatur von 20-25°C mit 1200rpm ±3rpm genau 2 Minuten gerührt. Dabei ist das Rührorgan auf Höhe der Phasengrenze zu positionieren. Danach wird die Emulsion in einen 250mL Messzylinder überführt und das Volumen an abgeschiedenem Wasser nach einer und vier Stunden abgelesen. Während der Messung soll der Messzylinder ruhen.

Die durch Einfachbestimmung ermittelten Messwerte sind innerhalb einer Messreihe vergleichbar und sollten durch das mitführen eines Standards wie z.B. Natriumlaurylsulfat überprüft werden. Sollte die Messung des Standards außerhalb des Toleranzbereiches liegen ist die Messreihe zu wiederholen.

Um die Phasengrenze bei Versuchen mit farblosen Ölen schärfer ablesen zu können, kann man die Testflüssigkeit mit etwas wasser- bzw. öllöslichen Farbstoff versetzen.

In einer Variante der Erfindung ist das Emulgiervermögen der erfindungsgemäßen Reinigungszusammensetzung konstant im Vergleich zu dem Wert einer Reinigungszusammensetzung ohne das erfindungsgemäße Biozid.

Weiterer Gegenstand der Erfindung ist die Verwendung von Zuckertensiden zur Steigerung der antimikrobiellen Wirkung der Biozid der Formel (I).

Ferner ist Gegenstand der Erfindung die Verwendung erfindungsgemäßen Reinigungszusammensetzung zur Reinigung und/oder Desinfektion von harten Oberflächen.

Die erfindungsgemäße, antimikrobielle Reinigungszusammensetzung zeigt eine gute, lang anhaltende Desinfektionswirkung. Ferner zeigt die erfindungsgemäße Reinigungszusammensetzung eine verbesserte primäre Reinigungsleistung sowie eine gleich bleibende bzw. verbesserte sekundäre Reinigungsleistung.

Durch den erfindungsgemäßen Einsatz eines Zuckertensids und einer Verbindung der Formel (I) als Biozid kommt es zu Synergieeffekten, deutlich werdend in einer verbesserten Reinigungsleistung und verbesserten antimikrobielles Wirkung.

Im Sinne der Erfindung wird eine Verbesserung, Steigerung oder Erhöhung einer Eigenschaft im Vergleich mit einer Kontrolle bestimmt in welcher die Komponente, deren Wirkung getestet wird, nicht vorhanden ist. Zur Durchführung dieser Versuche greift der Fachmann auf sein allgemeines Fachwissen zurück.

Synergetische Effekte im Sinne der vorliegenden Erfindung sind Effekte die nur durch die Kombination der erfindungsgemäßen nichtionischen Zuckertensiden mit den erfindungsgemäßen Biozidn entstehen und dadurch die Wirkung einer dieser Komponenten erhöht wird im Vergleich zu einer Kontrolle ohne diese Komponente.

### Beispiele

In den nachfolgenden Beispielen bedeutet Tinosan HP 100 eine 30%-ige Lösung von der biozide Verbindung der Formel 1 a in 1,2-propylenglykol.

### 1. Verbesserte Reinigungsleistung:

Die Reinigungsleistung wurde mittels des IPP-Gardner-Tests für Allzweckreiniger gemäß "IPP-Norm"(SÖFW, No. 10/1986, Seite 371) bestimmt.

### Erfindungsgemäße Formulierung

F3 (APC as ready to use):
- 2,5% Glucopon 425 N/HH (50%)
- 0,8% Citric Acid (100%)
- 0,5% NaOH (50%)
- 0,8% Sodium bicarbonate (100%)
- 0-0,5 % Tinosan HP 100

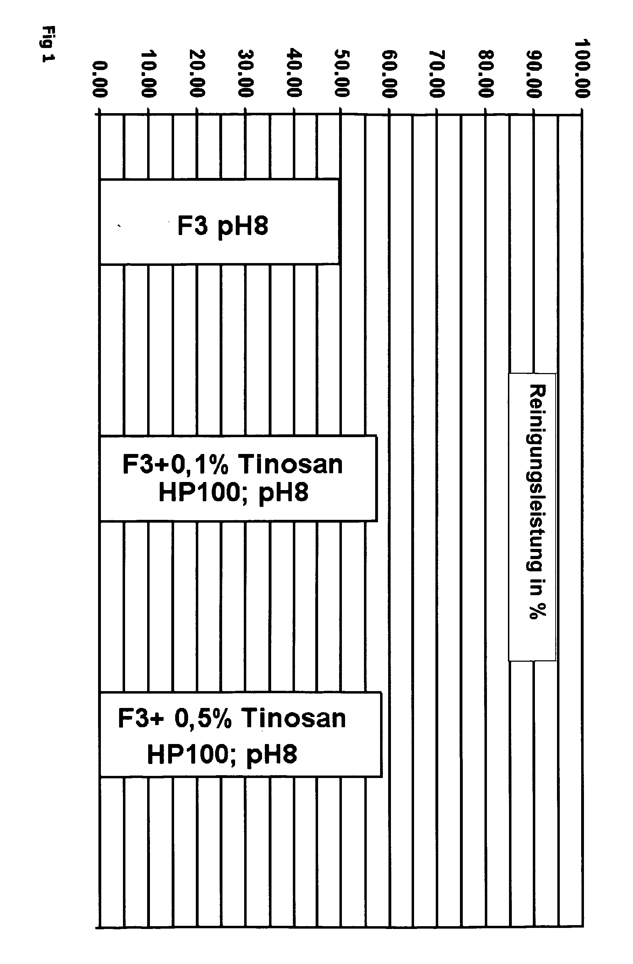

Aus Fig. 1 ist die Erhöhung der Reinigungsleistung eines Allzweckreinigers auf Basis von Zuckertensiden (Glucopon) zu erkennen.

### Vergleichsformulierungen:

F7 (APC as ready to use):
- 2,5% Texapon N70
- 0,8% Citric Acid (100%)
- 0,5% NaOH (50%)
- 0,8% Sodium bicarbonate (100%)
- 0-0,5 % Tinosan HP 100

F9 (APC as ready to use):
- 2,5% Dehydol LT 7
- 0,8% Citric Acid (100%)
- 0,5% NaOH (50%)
- 0,8% Sodium bicarbonate (100%)
- 0-0,5 % Tinosan HP 100

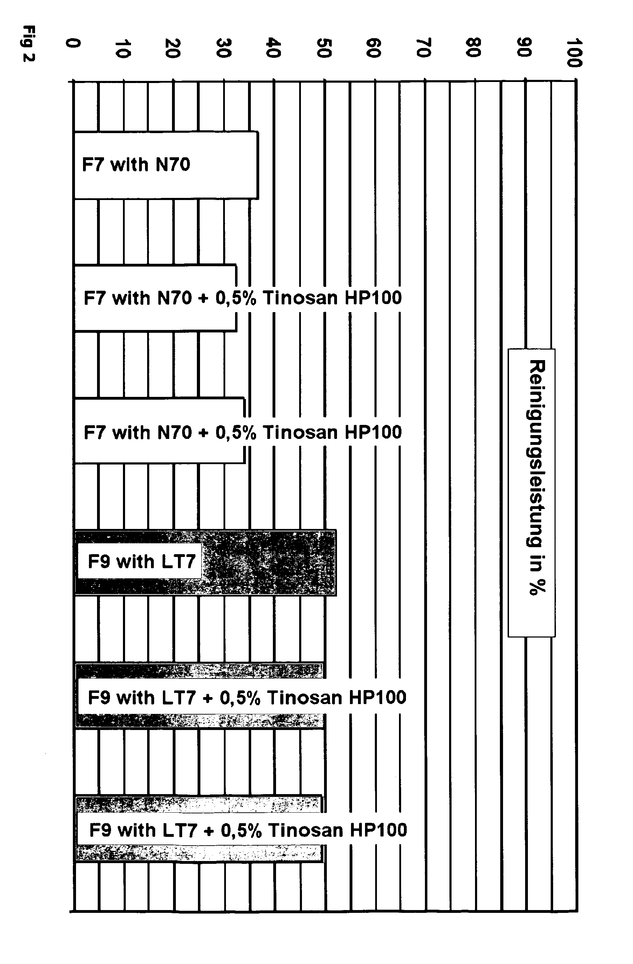

Aus Fig. 2 erkennt man, dass nur durch Zugabe des filmbildenden nichtionischen Tensids (Glucopon), die primäre Reinigungsleistung verbessert wird; bei Zugabe von einem Fettalkoholethoxylat (Dehydol LT 7), oder vom anionischen Tensid (Texapon N70 Laurylethersulfat) verschlechtert sich sogar die Reinigungsleistung.

### 2. Glanzverhalten:

Das Glanzverhalten wurde mit dem oben beschriebenen Test bestimmt:

| Formulierung | Glanz nach Behandlung [%] |
|---|---|
| F3 pH 8 | 76,6 % |
| F3 pH 9 | 78,2 % |
| F3 + 0,1% Tinosan H P 100 pH 8 | 74,1 % |
| F3 + 0,1% Tinosan H P 100 pH 9 | 84,8 % |
| F3 + 0,5% Tinosan HP 100 pH 8 | 79,4 % |
| F3 + 0,5% Tinosan HP 100 pH 9 | 78,4 % |

Ergebnis: das Glanzverhalten der Formulierung bleibt durch Zugabe des erfindungsgemäßen Biozid (Tinosan HP 100) unverändert gut und wird bei höheren Konzentrationen oder pH 9 sogar erhöht.

### 3. Materialverträglichkeit:

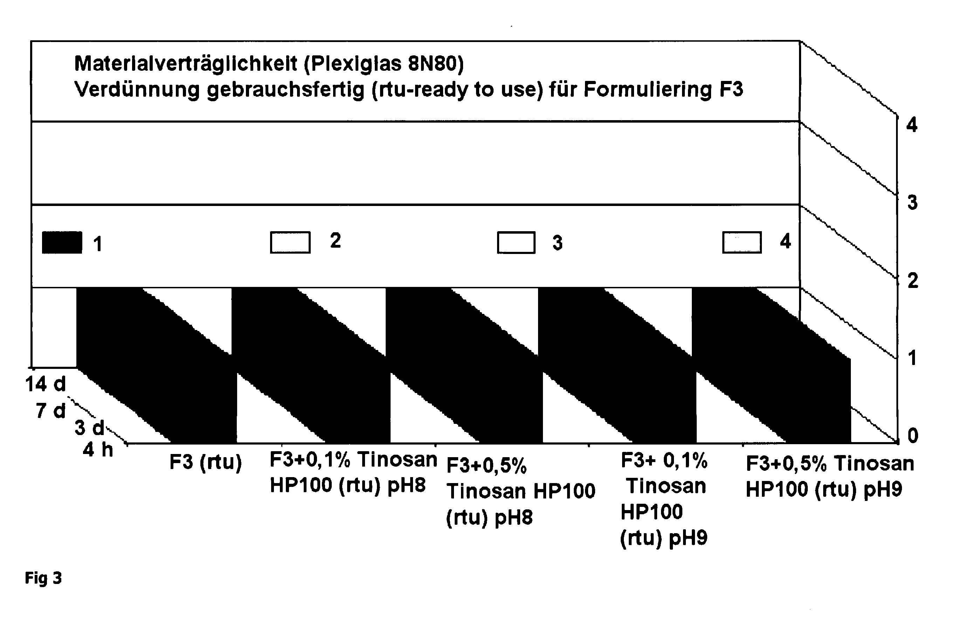

Die Materialverträglichkeit wurde mit dem oben beschriebenen Test bestimmt:
Ergebnisse sind der Fig. 3 zu entnehmen.

Die Zugabe des unpolaren Biozid verschlechtert nicht die Materialverträglichkeit der Reinigungsformulierungen auf Kunststoffen.

### 4. Emulgierbarkeit

Die Emulgierbarkeit wurde mit dem oben beschriebenen Test bestimmt:
Als Maß für die Emulsionsstabilität wird das Volumen an sich abscheidender wässriger Phase nach einer Stunde und nach vier Stunden bestimmt.

| | Höhe wässrige Phase [ml] | Höhe wässrige Phase [ml] |
|---|---|---|
| | 1h | 4h |
| F3 | 36 | 40 |
| F3 + 0,1% Tinosan H P 100 | 34 | 39 |
| F3 + 0,5% Tinosan HP 100 | 34 | 40 |

Ergebnis: Durch Zugabe von Biozid wird die Emulgierbarkeit von Ölivenöl nicht gesteigert.

### 5. Antimikrobielle Eigenschaften:

Die antimikrobielle, bakterizide Aktivität der erfindungsgemäßen Reinigungszusammensetzung wurde auf Schwämmen und Bodenbelag mittels eines leicht modifizierten US Standards AATCC 100-2004 bestimmt.

Die bakteriostatische Aktivität wurde gemäß CG Standard 147e (Agar Diffusion Test) bestimmt.

Es kamen erfindungsgemässe Reinigungszusammensetzungen (Allzweckreiniger und Handgeschirrspülmittel) mit 0-0.5% Tinosan HP 100 zum Einsatz.

Als Keime wurden pathogene Gram-positives Bakterien (Staphylococcus aureus ATCC 6538) and Gram-negative Bakterien (Klebsiella pneumoniae ATCC 4352 and Salmonella choleraesuis ATCC 9184) verwendet.

### Ergebnis:

Die antimikrobiellen Eigenschaften des Biozides der Formel 1a (Tinosan HP100) blieben erhalten. Sowohl die Keimabtötung, als auch die langanhaltende antimikrobielle Wirkung blieb unverändert bestehen.

## Patentansprüche

1. Antimikrobielle Reinigungszusammensetzung enthaltend mindestens ein
Zuckertensid und eine Verbindung der Formel (I) als Biozid 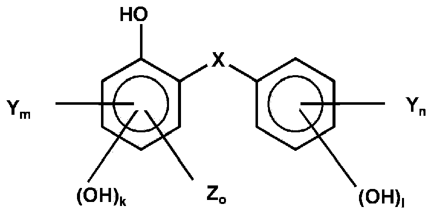 mit
X = O, S oder - CH2-,
Y = Cl oder Br,
Z = SO2H, NO2 oder C1 - C4-Alkyl,
k, l = 0 oder 1,
m = 0, 1, 2 oder 3,
n = 0, 1, 2 oder 3,
o = 0 oder 1.

2. Zusammensetzung nach Anspruch 1 **dadurch gekennzeichnet, dass** ein Zuckertensid der allgemeinen Formel (II)
**R-O-Gₚ**
mit R = Alkyl oder Alkenyl,
G = Aldose oder Ketose und
P = 1, 2, 3, 4, 5, 6, 7, 8, 9 oder 10 eingesetzt wird.

3. Zusammensetzung nach einem der vorhergehenden Ansprüche **dadurch gekennzeichnet, dass** R eine Kohlenstoffkette von C4-C22 ist, wobei diese linear oder verzweigt sein kann.

4. Zusammensetzung nach einem der vorhergehenden Ansprüche **dadurch**
**gekennzeichnet, dass** als Biozid eine Verbindung der Formel (la) 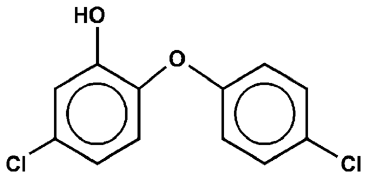 oder der Formel (Ib) 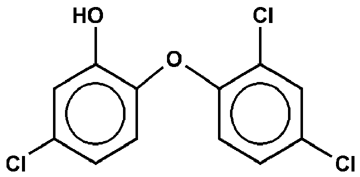 eingesetzt wird.

5. Zusammensetzung nach einem der vorhergehenden Ansprüche **dadurch gekennzeichnet, dass** als Zuckertensid Gemische unterschiedlicher Verbindungen der allgemeinen Formel (II) und als Biozid Gemische unterschiedlicher Verbindungen der allgemeinen Formel (I) eingesetzt werden.

6. Zusammensetzung nach einem der vorhergehenden Ansprüche **dadurch gekennzeichnet, dass** es sich um eine Reinigungszusammensetzung für harte Oberflächen handelt.

7. Zusammensetzung nach einem der vorhergehenden Ansprüche **dadurch gekennzeichnet, dass** sie einen pH-Wert zwischen 5 und 12 besitzt.

8. Zusammensetzung nach einem der vorhergehenden Ansprüche **dadurch gekennzeichnet, dass** sie als Konzentrat vorliegt.

9. Zusammensetzung nach einem der vorhergehenden Ansprüche **dadurch gekennzeichnet, dass** für die Reinigung Verbindung der Formel (I) in einer Endkonzentration von 0,0001 bis 10% eingesetzt wird.

10. Zusammensetzung nach einem der vorhergehenden Ansprüche **dadurch gekennzeichnet, dass** für die Reinigung Verbindung der Formel (II) in einer Endkonzentration von 0,1 bis 20% eingesetzt wird.

11. Zusammensetzung nach einem der vorhergehenden Ansprüche enthaltend mindestens einem weiteren Zusatzstoff ausgewählt aus der Gruppe enthaltend:
Stabilisatoren, Antioxidantien, weitere Tenside, hydrotrope Mittel, Konsistenzgeber, Konservierungsmittel, Duftstoffe, Farbstoffe, Komplexbildner,
Lösungsmittel und Wasser.

12. Verfahren zur Herstellung einer antimikrobiellen Reinigungszusammensetzung nach einem der vorhergehenden Ansprüche **dadurch gekennzeichnet, dass** das Biozid der Formel (I) zunächst in dem Zuckertensid vorgelöst wird und anschließend in eine wässrige Phase gebracht wird.

13. Verwendung eines Biozid der Formel (I) zur Steigerung der Reinigungsleistung von nicht-ionischen Zuckertensiden.

14. Verwendung von Zuckertensiden zur Steigerung der antimikrobiellen Wirkung der Biozid der Formel (I).

15. Verwendung einer Zusammensetzung der Ansprüche 1 bis 10 zur Reinigung und/oder Desinfektion von harten Oberflächen.
